# EUROPEAN PATENT SPECIFICATION

(11) **EP 0 361 340 B1**
(45) Date of publication and mention of the grant of the patent: **19.01.1994**
(21) Application number: 89117611.7
(22) Date of filing: 23.09.1989
(51) Int. Cl.: B65G 23/23, B65G 54/02

(54) **Conveyor system for moving materials and semi-worked items**
Fördersystem zum Bewegen von Material und Halbzeug
Système de convoyeur pour mouvoir des matériaux et des produits semi-finis

(30) Priority: 26.09.1988 IT 5341688 U; 26.07.1989 IT 5327689 U
(43) Date of publication of application: 04.04.1990
(73) Proprietor: FATA AUTOMATION S.p.A., I-10152 Torino (IT)
(72) Inventor: Avigdor, Paolo, I-10129 Torino (IT); Arato, Giovanni, I-14100 Asti (IT)
(74) Representative: Modiano, Guido, Dr.-Ing.

(56) References cited:
- EP-A- 0 197 751
- DE-A- 2 819 541
- FR-A- 1 589 474
- US-A- 3 426 887

## Description

The present invention relates to a conveyor system particularly for moving materials and semi-worked items.

Current known systems for moving materials and semi-worked items typically comprise a runway defined by at least one overhead or ground-level rail and a plurality of moving trolleys which move on and are guided by said runway; said trolleys rest on said runway by means of two or more rollers, at least one of which is a driving roller, the driving roller or rollers being actuated by an electromechanical motor reducer which generally comprises an asynchronous induction motor.

The peculiar characteristics of known conveyors of the specified kind are a relatively low advancement speed of the trolleys, which is generally comprised between 0.2 and about 2 meters per second, and, on the other hand, considerable positive and negative accelerations in the respective start-up and stop steps of said trolleys.

The second requirement forces the installation of considerably powerful motor-reducer assemblies on the trolleys, which assemblies are thus greatly oversized for the steps of advancement at constant speed. This entails the following disadvantages:
- considerable bulk of the propulsion systems,
- limited efficiency, due both to the power losses caused by the transmission of the motion and to the efficiency of the motors, which must be under-powered in the steps of motion at constant speed,
- mechanical complications of the structure of the trolleys, with consequent high installation and management costs,
- difficulty in checking the parameters of the motion of the trolleys when speed variations or modifications are required after the installation of the system.

In known conveyors of the specified kind, the transmission of power is furthermore limited by the friction coefficient between the driving rollers and the rail of the runway; this circumstance limits the value of the trolley start-up and stop accelerations on one hand and requires the accurate maintenance of the rolling surfaces and of the rollers, on the other, to prevent the reduction of the value of the friction coefficient for example due to the presence of a film of lubricant and/or condensed moisture and/or dust or the like.

Also known from DE-A-2,819,541 is a conveyor system as defined in the precharacterizing part of claim 1.

The aim of the present invention is to eliminate these disadvantages, and within this general aim the invention has the following important particular objects:
- to eliminate the presence of the motor reducer assemblies installed on the trolleys and to make the power transmission independent from the value of the friction coefficient between the runway and the rollers of the trolleys,
- to significantly reduce the weight and bulk of the trolleys and, at the same time, considerably simplify their structure, with corresponding significant advantages both in terms of power consumption and in terms of installation and maintenance costs,
- to make the conveyor system insensitive to the weather and atmospheric conditions of the work environment, in particular to the presence of moisture, of particles of suspended materials such as lubricants, paints, powders and the like,
- to make the conveyor system more flexible, in that it allows to program the values of the speeds and accelerations of the individual trolleys in the different portions of the path.

This aim, these important objects and others which will become apparent hereinafter from the following detailed description are achieved by a conveyor system, as defined in claim 1.

The invention is described in detail hereafter with reference to the accompanying drawings, wherein:
figure 1 is a schematic sectional view of the inductor-armature assembly illustrating the principle of the conveyor system according to the invention,
figure 2 is a sectional view similar to figure 1 which illustrates the reverse arrangement of the inductor-armature assembly,
figure 3 is a schematic transverse sectional view, which illustrates a preferred embodiment of the conveyor system according to the invention,
figure 4 is a lateral elevation view taken along the direction of the arrows VI-VI of figure 3,
figure 5 is a perspective view of a portion of the rail of the system of figure 3,
figure 6 is a lateral elevation view, similar to figure 4, which illustrates one mode of application with paired contiguous trolleys.

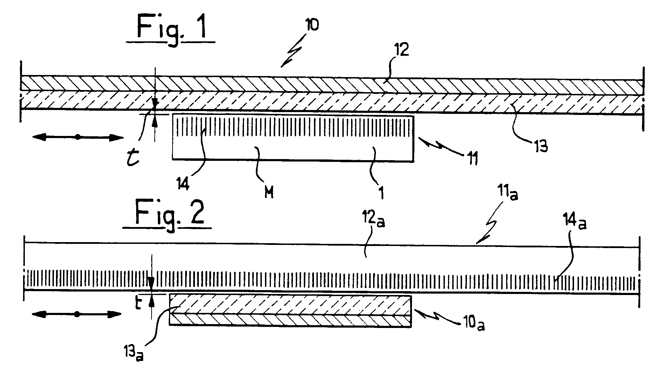

The diagram of figure 1 illustrates the general principle of the conveyor system according to the invention. The reference numeral 10 indicates the armature, which is constituted by the conveyor system runway itself, and 11 indicates the inductor, which is constituted by a magnetizable core M rigidly associated with each individual trolley of the conveyor; the armature and the inductor are separated by an air gap "t".

The armature 10 comprises a ferromagnetic portion 12 which coincides with the rail of the runway or with a part thereof, and a plate 13 made of conducting non-magnetic material, advantageously aluminum, stably coupled to the portion 12. The magnetic core M of the inductor 11 is provided with the exciter windings 14, which are advantageously of the three-phase type and are accommodated in a per se known manner in respective recesses (not illustrated) which define corresponding polar expansions (also not illustrated) of the core which are arranged facing the armature 10; the excitation current is fed to the windings 14 by means of sliding contacts which will be described hereafter.

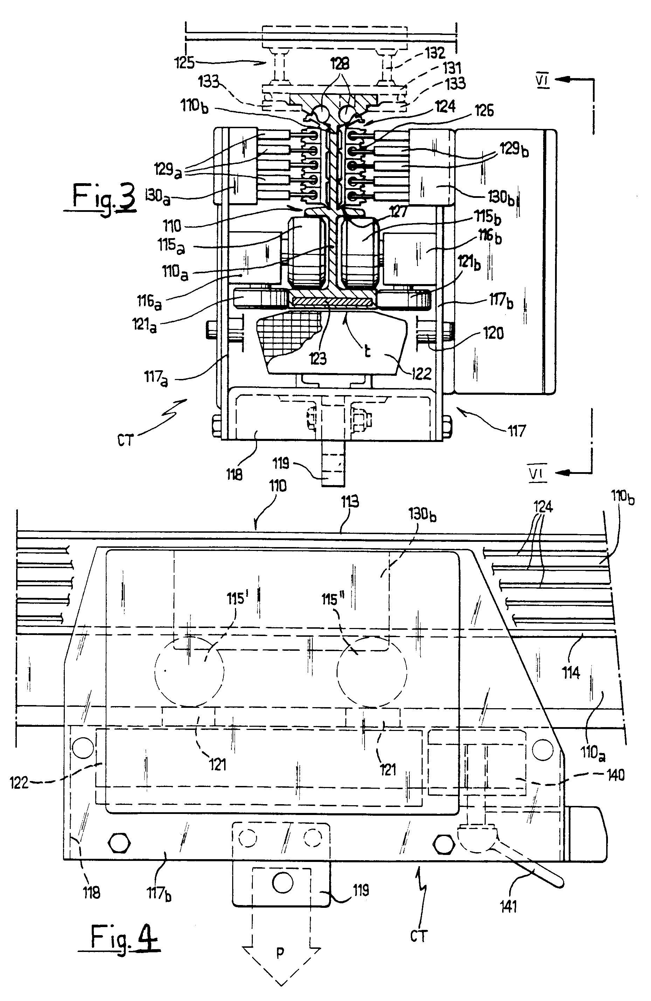

In the alternative arrangement of the diagram of figure 2, the armature 10a is constituted by the core which is rigidly associated with each individual trolley and the inductor 11a is constituted by the rail or rail portion 12a of the runway. The exciter windings 14a are consequently accommodated in corresponding recesses of the rail, and the core of each individual trolley is provided with a corresponding non-magnetic plate 13a.

In the embodiment of the invention illustrated in figures 3 to 6, the rail 110 is constituted by a profiled element made of extruded aluminum which is the result of the combination of a first rail portion 110a and of a second rail portion 110b which are superimposed and are both substantially double T-shaped.

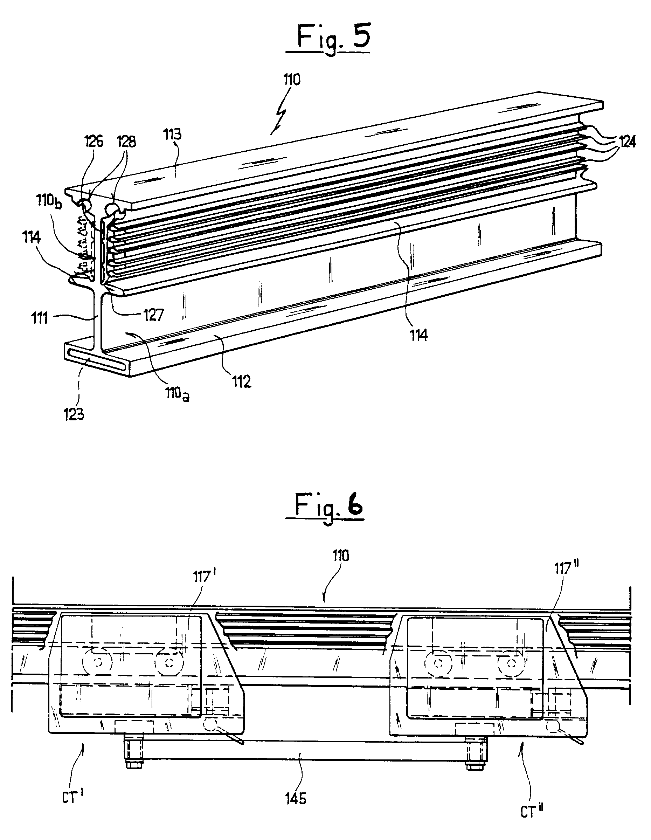

The rail 110 is therefore characterized (figure 5) by a vertical rib 111, by a base plate 112, by a top plate 113 and by intermediate wings 114 which are orthogonal to the rib 111 and separate the first rail portion from the second rail portion.

The first portion 110a, which is delimited by the base plate 112 and by the intermediate wings 114, is adapted to contain first opposite rollers 115a, 115b for the suspension and sliding of each individual trolley. Said rollers, which are freely rotatable around a horizontal axis, are supported by corresponding supports 116a and 116b which are rigidly associated with respective opposite lateral wings 117a, 117b of the suspension elements 117 of each trolley CT. Said suspension elements comprise, besides said lateral wings 117a, 117b, a stiff plate 118 connecting said lateral wings and provided with a hook 119 for the load, and spacers 120 which are arranged so that the configuration of said suspension elements 117 is substantially U-shaped to allow the passage of the rail 110.

The first suspension and sliding rollers 115a, 115b roll on the corresponding opposite wings of the base plate 112 and are provided with a peripheral ring surface made of non-ferrous material and with rolling bearings with lubrication for life to improve the sliding of the trolleys.

Each trolley is advantageously provided with two pairs of first opposite rollers which are indicated by 115' and 115'' in figure 8. Second lateral contrast and containment rollers 121a, 121b co-operate with said first suspension and sliding rollers, are supported, so as to be freely rotatable, by the respective opposite supports 116a, 116b and laterally engage the base plate 112 in order to prevent lateral oscillations of the suspension elements 117 with respect to the rail 110. This allows to minimize the air gap "t" defined between the base plate 112 and the inductor core 122 which is supported by the connecting plate 118 in a position underlying the base plate 112; most of all, however, it keeps said air gap constant, since the described suspension system is insensitive to load variations, to any eccentricity thereof and to the inertial forces which act on the trolley.

A strip 123 of magnetic material, preferably "Fe 37", is also embedded in the base plate 112 by coextrusion and constitutes the armature of the linear motors which have the cores 122 of each individual trolley as inductors.

The second rail portion 110b which is delimited by the top plate 113 and by the intermediate wings 114 is intended to contain the power supply and control conducting bars 124 in a position providing maximum safety but easy access thereto and to receive supports 125 for suspending the rail 110 from the supporting structure.

The conducting bars 124, which are of the metal-enclosed type, are removably connected to one face or both faces of the rib 111 by means of known supports 126 which can be snap-coupled in corresponding seats 127, 128 provided at the root of the intermediate wings 114 and respectively on the top plate 113.

The possibility of using one face, the other face or both faces of the central rib 111 to accommodate the conducting bars 124 is a considerable advantage both in terms of installation and in terms of system modification.

Sliding contacts 129a, 129b co-operate with the bars 124 and are supported by corresponding current collector assemblies 130a, 130b which are supported by one or both of the lateral wings 117a, 117b of the suspension elements 117 of each trolley.

By virtue of the configuration of the rail 110, the supports 125 are arranged at the center of gravity of the entire suspended system and are simply constituted by crosspieces 131 which are supported by tie rods 132; locking plates 133 co-operate with said crosspieces and are adapted to clamp the wings of the top plate 113 of the rail 110 by virtue of the traction of the tie rods which engage in respective holes of the crosspieces.

The suspension elements 117 of each trolley are furthermore preferably provided with a braking and parking skid 140 which is supported by the connecting plate 118 and is pushed into engagement contact with the lower face of the base plate 112 by an electromagnetic actuation (not illustrated) controlled by a manual actuation 141 of the kind with a threaded shaft which engages a threaded seat of the braking skid.

The axial extension of the core 122 of each trolley is preferably rather small, advantageously not exceeding 1.5 times the center distance between the pairs of first rollers 115', 115'', in order to minimize the flux dispersed at the curves of the rail 110 where each core 122 arranges itself substantially along the chord of the curve itself. This entails a corresponding containment of the power used for each trolley; this containment can be easily obviated, when higher power is required, by connecting two or more movement and suspension elements 117', 117'' of respective trolleys CT', CT'' by means of articulated rods 145, as clearly illustrated in figure 6.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A conveyor system for moving materials and semi-worked items, of the kind comprising an overhead or ground-level runway (10; 11a; 110) and a plurality of trolleys (CT) which are movable on said runway, each trolley being provided with a magnetically active core (M; 10a; 122) which interacts, through an air gap (t), with the rail (10; 11a; 110) of said runway; each of said cores and said rail constituting an inductor-armature pair of asynchronous linear motors powered by a multiple-phase alternating current which generates a magnetic vector which moves in the trolley direction of motion,
characterized in that said runway comprises a rail (110) made of non-magnetic material with a first and a second portion (110a; 110b) which are superimposed, and are both double T-shaped, in that said first rail portion (110a), which is delimited by a base plate (112) which has an insert (123) of magnetic material and by intermediate wings (114), is intended to contain first opposite horizontal-axis rollers (115a; 115b) for the suspension and sliding of each trolley (CT), said rollers rolling on the corresponding wings of said base plate (112), the sides of said base plate being furthermore engaged by second lateral contrast and containment rollers (121a; 121b), said first and second rollers (115; 121) being supported in pairs by corresponding opposite lateral wings (117a; 117b) of the suspension element (117) of each trolley, and in that said second rail portion (110b), which is delimited by the intermediate wings (114) and by a top plate (113) intended to receive rail suspension supports (125), is provided, at least on one face of the central rib (111) with a plurality of conducting bars (124) for power and signal currents engaged by respective sliding contacts (129a; 129b) supported by at least one of said opposite lateral wings (117a; 117b).

2. A conveyor system according to claim 1, characterized in that said rail (110) comprises a vertical rib (111), said base plate (112), said top plate (113) and said intermediate wings (114) being orthogonal to said rib (111), said intermediate wing (114) separating said first rail portion (110a) from said second rail portion (110b).

## Patentansprüche

1. Fördersystem zum Bewegen von Material und Halbzeug, umfassend eine oberirdische oder bodengleiche Führungsbahn (10; 11a) und eine Vielzahl von Laufkatzen bzw. Förderwagen (CT), die auf der Führungsbahn bewegbar sind, wobei jeder Förderwagen mit einem magnetisch aktiven Kern (M; 10a) versehen ist, der durch einen Luftspalt (t) mit der Schiene (12; 12a; 20; 110) der Führungsbahn zusammenwirkt, wobei jeder der Kerne und die Schiene ein Induktor-Armaturpaar assynchroner linearer Elektromotoren bilden, die durch einen mehrphasigen Wechselstrom gespeist sind, welcher einen magnetischen, in die Förderwagenbewegungsrichtung gerichteten Vektor erzeugt, dadurch gekennzeichnet, daß die Führungsbahn eine aus unmagnetischem Material hergestellte Schiene (110) mit einem ersten und einem zweiten Abschnitt (110a; 110b), die überlagert und beide Doppel-T-förmig sind, umfaßt, daß der erste Schienenabschnitt (110a), der durch eine Grundplatte (112), welche einen Einsatz (123) aus magnetischem Material aufweist, und durch Zwischenflügel (114) begrenzt ist, vorgesehen ist, um erste gegenüberliegende Kippachsenrollen (115a; 115b) für die Aufhängung und das Gleiten jedes Förderwagens (CT) einzuschließen, wobei die Rollen auf den entsprechenden Flügeln der Grundplatte (112) abrollen, wobei die Seiten der Grundplatte weiterhin mit zweiten seitlichen Gegen- und Halte- bzw. Einschließungsrollen (121a; 121b) in Eingriff sind und wobei die ersten und zweiten Rollen (115; 121) in Paaren von entsprechenden gegenüberliegenden seitlichen Trägern bzw. Flügeln (117a; 117b) des Aufhängeelements (117) jedes Förderwagens getragen sind, und daß der zweite Schienenabschnitt (110b), der durch die Zwischenflügel (114) und durch eine zur Aufnahme von Schienenaufhängungsträger (125) vorgesehene Kopfplatte (113) begrenzt ist, wenigstens an einer Fläche der zentralen Rippe (111) mit einer Vielzahl stromleitender Schienen (124) für Stark- und Signalströme versehen ist, die mit entsprechenden Gleitkontakten (129a; 129b), welche von wenigstens einem der gegenüberliegenden seitlichen Flügel (117a; 117b) getragen sind, in Eingriff stehen.

2. Fördersystem nach Anspruch 1, dadurch gekennzeichnet, daß die Schiene (110) eine vertikale Rippe (111), die Grundplatte (112), die Kopfplatte (113) und die Zwischenflügel (114), die orthogonal zu der Rippe (111) sind, aufweist, wobei der Zwischenflügel (114) den ersten Schienenabschnitt (110a) von dem zweiten Schienenabschnitt (110b) trennt.

## Revendications

1. Système convoyeur pour acheminer des matériaux et des produits semi-finis, du type comprenant une voie de roulement en surplomb ou au niveau du sol (10; 11a; 110) et une pluralité de chariots transporteurs (CT) qui sont mobiles sur ladite voie de roulement, chaque chariot transporteur étant muni d'un noyau magnétiquement actif (M; 10a; 122) qui coopère par l'intermédiaire d'un entrefer (t) avec le rail (10; 11a; 110) de ladite voie de roulement; chacun desdits noyaux et ledit rail constituant une paire inducteur-induit de moteurs linéaires asynchrones alimentés par un courant alternatif multiphasé qui génère un vecteur magnétique qui se déplace dans la direction du mouvement du chariot transporteur,
caractérisé en ce que ladite voie de roulement comprend un rail (110) réalisé en un matériau non magnétique avec une première et une seconde portions (110a; 110b) qui sont superposées, et qui sont toutes les deux en forme de double T, en ce que ladite première portion de rail (110a), qui est délimitée par une plaque de base (112) qui comprend un insert (123) en matériau magnétique et par des ailes intermédiaires (114), est prévue pour contenir des premiers galets opposés à axe horizontal (115a; 115b) pour la suspension et le glissement de chaque chariot transporteur (CT), lesdits galets roulant sur les ailes correspondantes de ladite plaque de base (112), les côtés de ladite plaque de base étant en outre en engagement avec des seconds galets latéraux de contraste et de retenue (121a; 121b), lesdits premiers et seconds galets (115; 121) étant supportés par paires par des ailes latérales opposées correspondantes (117a; 117b) de l'élément de suspension (117) de chaque chariot transporteur, et en ce que ladite seconde portion de rail (110b), qui est délimitée par les ailes intermédiaires (114) et par une plaque supérieure (113) prévue pour recevoir les supports de suspension de rail (125) est munie, au moins sur une face de la nervure centrale (111), d'une pluralité de barres conductrices (124) destinées à la puissance et aux courants de signaux en engagement avec des contacts coulissants respectifs (129a; 129b) supportés par l'une au moins desdites ailes latérales opposées (117a; 117b).

2. Système convoyeur selon la revendication 12, caractérisé en ce que ledit rail (110) comprend une nervure verticale (111), ladite plaque de base (112), ladite plaque supérieure (113) et lesdites ailes intermédiaires (114) étant orthogonales à ladite nervure (111), ladite aile intermédiaire (114) séparant ladite première portion de rail (110a) de ladite seconde portion de rail (110b).
